# EUROPEAN PATENT APPLICATION

(11) **EP 1 128 668 A2**
(43) Date of publication of application: **29.08.2001**
(21) Application number: 01301656.3
(22) Date of filing: 23.02.2001
(51) Int. Cl.: H04N 5/262

(54) **Methods and apparatus for enhancement of live events broadcasts by superimposing animation, based on real events**

(30) Priority: 26.02.2000 GB 0004501
(71) Applicant: Orad Hi-Tec Systems Limited, Kfar Saba 44425 (IL)
(72) Inventor: Sharir, Avi, Ramat Hasharon 67727 (IL); Tamir, Michael, Tel-Aviv 69122 (IL)
(74) Representative: Fox-Male, Nicholas Vincent Humbert

(57) **Abstract**

An icon representing a virtual player is displayed on a television screen, together with a real player in a current live event so that the progress of the real player can be compared by a viewer against the progress of the icon which can represent a previous performance.

## Description

The present invention relates to a method of graphical enhancement of a video signal of live sports events. In particular, the invention relates to methods for superimposing an animation of a runner, swimmer or any other graphical object into a video signal in a way that looks like the superimposed image or the graphical object is tied to the sport field and moves on the real sport field. The invention also relates to a method of creating an animation that is based on real sports event. This can be implemented, for example, to superimpose an animation of the world's record on a real sports field during a real event, thus enabling the viewer to compare in a visual way between the current event and the world's record performance.

International sports events or other spectacles generally draw the attention of spectators in many countries. For example, the Olympic games, World Cup, Superball, Auto races, etc, fit into this category. Such events are generally broadcast live by video to a large international audience. Live television broadcasting of sports events can achieve greater attention by enhancing the video in real time. Examples for video signal enhancement are superimposing virtual advertisement on the playing field or around the playing field in a way that looks as if the virtual advertisement is assimilated with the playing field, without blocking the players on the field (see for example US Patent No. 5,903,317, PCT/US 95/09946 and WO97/09823). Another example is the insertion of a virtual video wall around the playing field, thus enabling the integration of two video feeds such as a wide view of a game with a close-up of a specific player.

Video signal enhancement can also be found in replay broadcast platforms, for example, the Replay US Patent No. 5,923,365. In these systems, after analysing the camera movement and the players trajectories, the system adds a graphics highlight overlay. These systems have two major disadvantages, first the system works in a delayed mode and secondly it integrates the graphics as foreground overlays, which sometimes partly blocks the sports players.

It is an object of the present invention to provide animation for a live sports event, the live animation comprising one or more icons which are constrained to move with the players to provide an indication to a viewer of the progress of a player in the live sports event relative to a known standard. The word player is intended to embrace players, athletes or even other objects competing in a sports event.

In particular, the standard for the live event may be a world record performance.

In such a case the progress of the animated player/athlete in the real event is continuously compared with the world record performance. The movement of the player can either be taken from an actual video of a world record event or can be estimated from a known world record.

If the movement is taken from the actual event then the real athlete will move at a variable rate dependent on the progress of the actual event. If the movement is taken from a known world record time or distance, but not from an actual videoed event, then the time or distance per second, or part thereof, is calculated and thus the athlete will move accordingly.

The present invention provides a method of displaying an icon on a television screen to be seen by a viewer when the viewer is viewing an event, said method comprising the steps of:
a) calculating the position with time of a player in a previous event to be represented by the icon in each of a plurality of defined time intervals,
b) generating an animated graphic or icon as video overlay based on the calculated position at data in step b) in which said icon appears in the position of the player to be inserted at said defined intervals,
c) overlaying said video display on to a further event of the same type as said first event to enable the progress of real players in the further event to be continuously compared against the progress of the players represented by the icon in the previous event.

Preferably said calculation of the position of the icon in step a) comprises the step of mapping the present course or stadium in real coordinates.

Preferably the generation of the video display in step b) comprises the step of mapping the player on to a course to be subsequently followed by real players in world coordinates.

Preferably this method comprises the steps of transforming the world coordinates to screen coordinates during the live event and to overlay the position of the player on to the screen coordinates in accordance with the camera field of view for comparison with the real objects present on the course.

The term previous event if defined to include an actual previous event and also a predefined previous event.

For example, in a race an average speed player may be displayed for comparison against the actual real player.

In an additional embodiment the speed of the icon during the event can be controlled to, for example, conform to the movement of the player thereby giving the players speed.

Overlay is defined as foreground overlay or background overlay using a keying method such as chromakey or difference key. The icon will therefore appear to be moving on the same field as the player.

Embodiments of the present invention will now be described, by way of example with reference to the accompanying drawings in which:-
Figure 1 shows a timing table illustrating recording of time versus distance for either a recorded prior event or, a known previous record time for an event or, a fixed standard time such as, for example, 19 seconds for 200 metres,
Figure 2 shows a flow diagram for the generation of the virtual runner.
Figure 3 shows a first embodiment for matching the fields.
Figure 4 shows a second embodiment for mapping world coordinates,
Figure 5 illustrates camera views of a field for two sensor readings S1 and S2,
Figure 6 illustrates mapping of a track in world coordinates,
Figure 7 illustrates transformation of world coordinates to real coordinates for positioning the virtual runner on a real track.

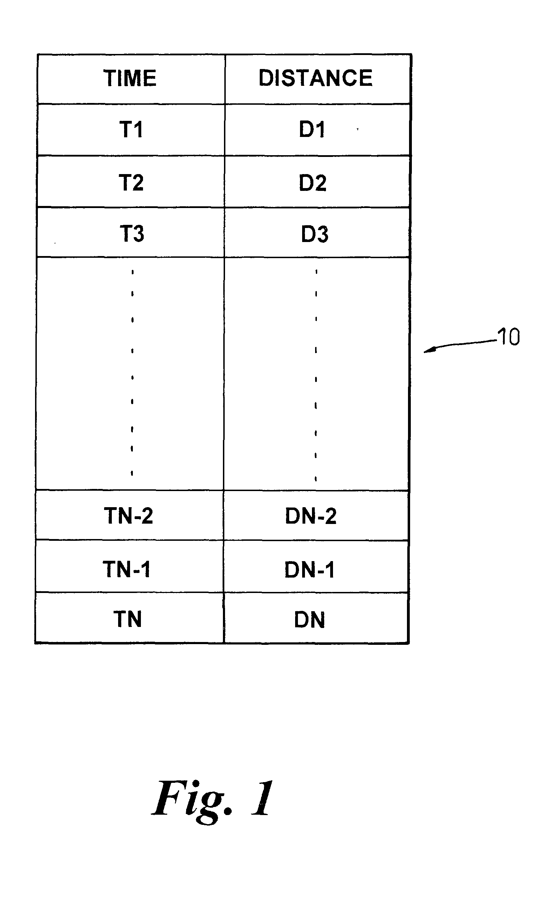

With reference now to Figure 1, a table 10 is required to be generated showing time versus distance, for example, an object such as a "runner" as the runner progress round a track. This can be any object which moves around a defined track or over a defined path.

Such an object could be swimmer, horse (as in a horse race), a long jumper, a skier or could be an inanimate object such as a boat or car.

The track can therefore be a running track or a long jump run-up and pit, a ski slope, a horse racing track, a stretch of water or a swimming pool, etc.

Therefore, when the term player is used this is intended to cover any object which can move over a defined track. Track is intended to cover any track or course as outlined above.

The object of the invention is to display an icon representing a virtual player alongside a real, ie present player, to enable the viewer to compare performances or times.

The progress of the icon which determines the table of Figure 1 can be obtained in several ways.

Possibly the most straightforward way is when a target time is used. This could be either a world record or a possible future target record. The record time can for example be divided equally in, for example, 20 m. sec intervals against the distance. The icon will then move at a steady pace around the track. An additional option can be dividing the world record according to a certain pattern that depends on the type of the event.

As an alternative to a specific record, a set speed could be set into the table. This could be made variable by a simple arithmetic calculation table which may be controllable by, for example, a commentator.

As a specific example, an athlete's speed may be 30 k/hr (30 kilometers per hour). The commentator may control the icon to keep pace with the athlete (car, skier, etc) and a readout can therefore indicate the exact speed of the athlete. Alternatively, by setting the speed of the icon to say 30 k/hr, the athlete can be seen to be drawing away or falling behind this selected speed.

An actual previous run, for example, a world record 5,000 metres run can be used to provide the table. In this case, because the progress of the athlete is not uniform, the position of the athlete at defined time intervals from the start gun is preferably recorded by a suitable pointer used to manually, semi automatically or automatically pinpoint the athlete's position on the video. Though time consuming, it generates accurate speed and position measurements of the reference run, and thus can show to the viewer very clearly a comparison between a present real world record attempt and the previous world record.

The system takes the time/distance of a player in world coordinates on, for example, a known race track/path and then translates this on to the real track by a conversion.

To place the icon representing the player on to the present, real track being followed by a present player or athlete, the track must be carefully mapped and the player's position must be identified. Identification of positions on a track can be made by a system such as described in US Patent No. 5,903,317, PCT/US95/09446 and W097/09823 to which reference should be made.

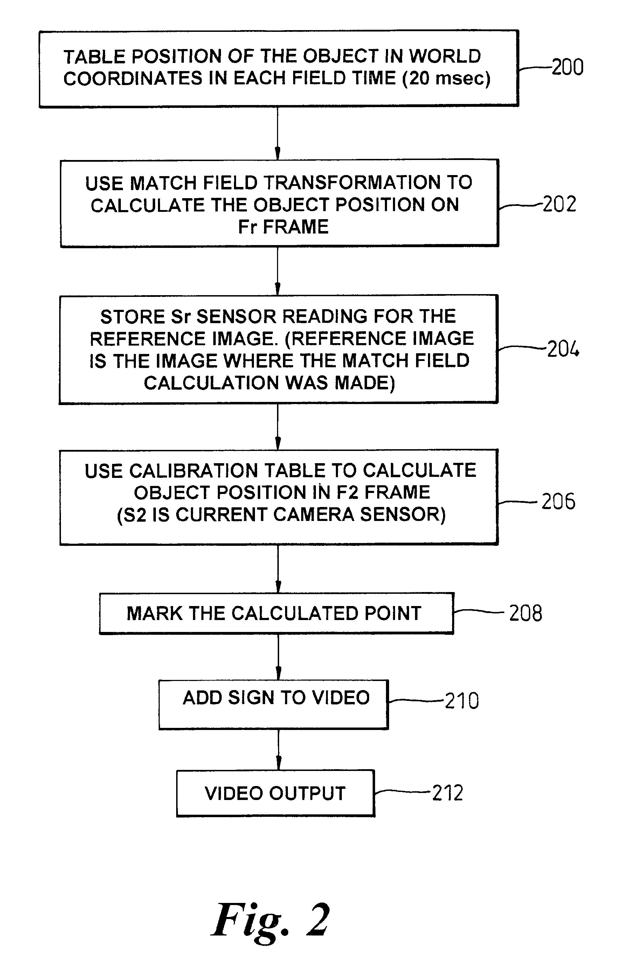

The inclusion of the icon is enabled as described with reference to figures 2 to 7.

The method is shown in Figure 2. In step 200 the position of the object in world coordinates in each field time is tabled as indicated in Figure 1.

In step 202, a known match field transformation between the world coordinates and the screen coordinates is used to calculate the position of the object in a first Fr frame (reference frame).

In step 204, the Sr sensor reading for the reference image (Fr), ie the image where the match field calculation was made is stored.

In step 206, a calibration table is used to calculate the object position in a second F2 frame, by using the parameter reference readings of the current camera sensors (S2).

In step 208, the calculated point for the icon is marked on the video image using the transformation information and the current sensor (S2) readings. This "point" is preferably four points forming a rectangle within which the icon appears. The icon can be a spot or could be a 3D graphic of a player/athlete or object.

In the final step 210, the icon sign is added to the video to provide the combined video output 212.

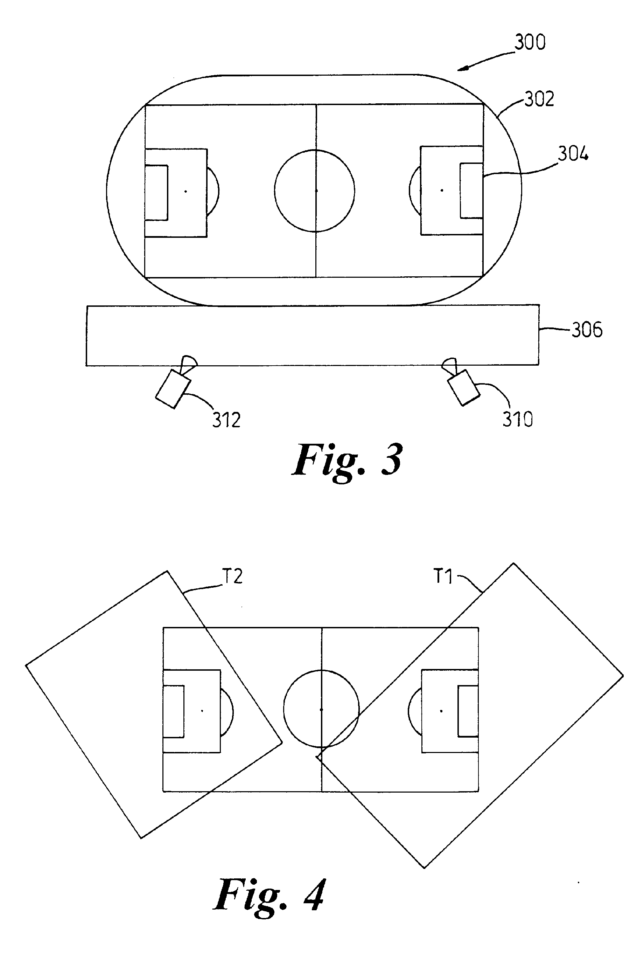

Figure 3 shows a typical stadium 300 which may comprise a running track 302, a football pitch 304 and, for example, a 100 meter running track 306.

The stadium may be viewed by a camera 310 which may provide a video of the track and players on the track.

A second camera 312 may also be used to video the other end of the track and in this case a match must be made for positions on the track when viewed with the two cameras.

Each camera will have sensors attached to it to ascertain its field of view. The matching between track areas and screen coordinates can be made by image pattern recognition as explained in the above referenced patents.

For a track, for example, the track must be defined before the event commences, preferably with no players present. The distance round the track will then be determined by x, y coordinates recorded in a suitable store.

A model of the track is prepared which could be done with a single shot of the track, but as shown in Figure 4 normally made up from several shots T1, T2. A complete model of the track must be assembled using one, two or a plurality of views.

A transformation between world coordinates and the model for the track is compiled. The position of the points in the track can be made using the video image which should preferably include a combination of lines, preferably 4 or more , to give 4 connection points.

The views T1, T2 are taken at specific camera sensor readings.

A transformation can then be made between the real world coordinates and the screen coordinates against which the previous event is displayed so that the icon representing the previous player can be then displayed by transformation on the present (real video).

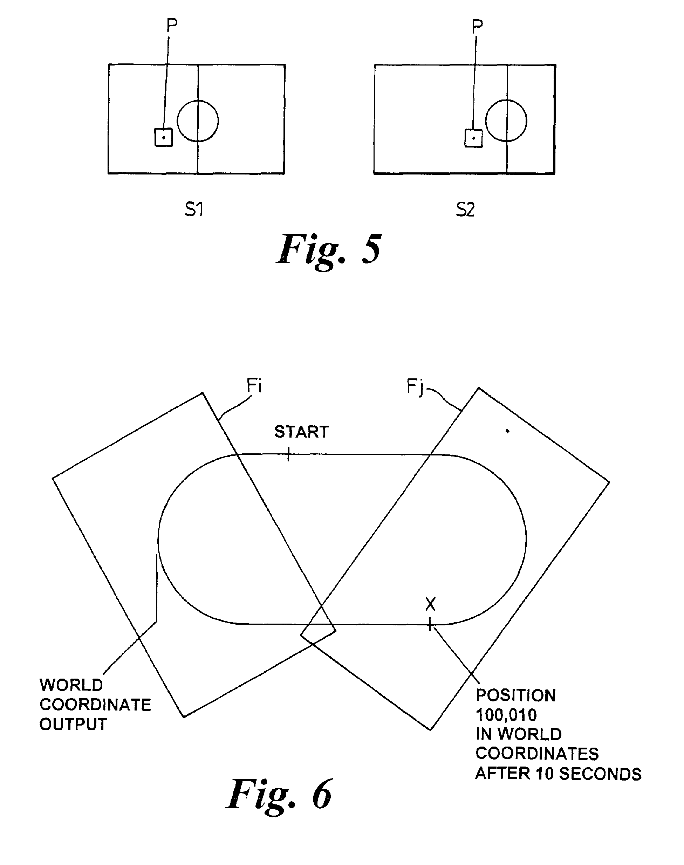

Figure 5 shows the difference in a stadium with camera sensors reading S1 and S2 showing a point P which is shown in Figure 5(a) will "move" in the video frame between the frames F1 and F2 corresponding to S1 and S2 accordingly.

In Figure 6 from the start a player represented by an icon (athlete in this case) moves round the track into Fi and then into Fj where its position X is shown in screen coordinates during of the race. The icon must be timed to commence movement at the time of the starting gun. This will normally be done manually.

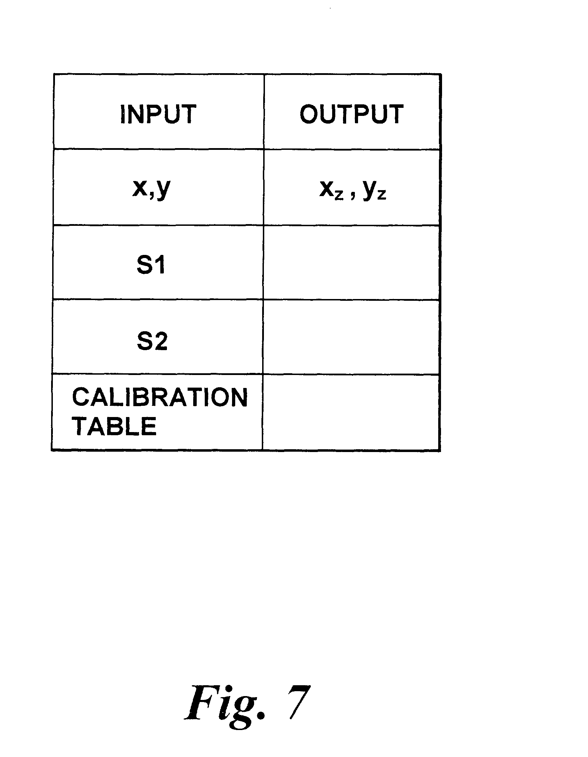

With reference to Figure 7, the calculation required is to produce output coordinates xz, yz for the icon in the present video from the point x, y from the previous event.

The calculation as described above is to use the original coordinates x, y and then the sensor reading S1, S2 and usually a calibration correction. This enables the icon position to be calculated for angular movement from one sensor point to another.

The icon can then be superimposed over the current video image using, for example, chroma key or difference key techniques.

The icon will appear then to move along the track in the present video to enable the movement of the icon and a present player to be compared.

## Claims

1. A method of displaying an animated graphics or icon on a television screen to be seen by a viewer when the viewer is viewing an event, said method comprising the steps of:
a) calculating the position with time of a player in a previous event to be represented by the animated graphics or icon in each of a plurality of defined time intervals,
b) generating a video overlay based on the calculated position at data in step b) in which said animated graphics or icon appears in the position of the player to be inserted at said defined intervals,
c) overlaying said video display on to a further event of the same type as said first event to enable the progress of real players in the further event to be continuously compared against the progress of the players represented by the animated graphics or icon in the previous event.

2. A method of displaying an animated graphics or icon on a television screen as claimed in claim 1 in which said calculation of the position of the animated graphics or icon in step a) comprises the step of mapping the present course or stadium in screen coordinates.

3. A method of displaying an animated graphics or icon on a television screen as claimed in claim 1 or claim 2 in which the generation of the video display in step b) comprises the step of mapping the player on to a course to be subsequently followed by real players in coordinates.

4. A method of displaying an animated graphics or icon on a television screen as claimed in any one of claims 1 to 3 in which this method comprises the steps of transforming the world coordinates to screen coordinates during the live event and to overlay the position of the player on to the screen coordinates in accordance with the camera field of view for comparison with the real objects present on the course.

5. A method of displaying an animated graphics or icon on a television screen as claimed in any one of claims 1 to 4 in which the speed of the icon during the event can be controlled to, for example, conform to the movement of the player thereby giving the players speed.

6. The present invention provides apparatus displaying an animated graphics or icon on a television screen to be seen by a viewer when the viewer is viewing an event, said method comprising the steps of:
a) means for calculating the position with time of a player in a previous event to be represented by the animated graphics or icon in each of a plurality of defined time intervals,
b) means for generating a video overlay based on the calculated position at data in step b) in which said animated graphics or icon appears in the position of the player to be inserted at said defined intervals,
c) means for overlaying said video display on to a further event of the same type as said first event to enable the progress of real players in the further event to be continuously compared against the progress of the players represented by the animated graphics or icon in the previous event.

7. A method of displaying an animated graphics or icon on a television screen as claimed in any one of claims 1 to 6 in which the animated graphics or the icon can then be superimposed over the current video image using, for example, chroma key or difference key techniques.
